# EUROPÄISCHE PATENTANMELDUNG

(11) **EP 0 531 574 A1**
(43) Veröffentlichungstag der Anmeldung: **17.03.1993**
(21) Anmeldenummer: 91115577.8
(22) Anmeldetag: 13.09.1991
(51) Int. Cl.: F16G 11/00, E01F 7/04

(54) **Seilbremse für ein Befestigungsseil zum Fixieren eines Fangnetzes, insbesondere Steinschlagnetzes**

(71) Anmelder: IAKO S.A., L-1840 Luxembourg (LU)
(72) Erfinder: Hofer, Annalise, I-39057 Appiano (BZ) (IT)
(74) Vertreter: Nöth, Heinz, Dipl.-Phys.

(57) **Zusammenfassung**

Eine Seilbremse für ein Befestigungsseil zum Fixieren eines Fangnetzes, bei der eine auf das Befestigungsseil einwirkende schlagartige Belastungsenergie in Reibungsenergie umgewandelt wird, wobei an einem Träger (2) mehrere Bremselemente (3) mit kreisrundem Querschnitt befestigt sind und daß ein Stück des Befestigungsseiles um die Bremselemente mit jeweils einfachem Umschlingungswinkel geschlungen ist.

## Beschreibung

Die Erfindung betrifft eine Seilbremse für ein Befestigungsseil zum Fixieren eines Fangnetzes, insbesondere Steinschlagnetzes oder Auffangnetzes für eine Lawinenverbauung, bei der eine auf das Befestigungsseil einwirkende schlagartige Belastungsenergie in Reibungsenergie umgewandelt wird. Eine derartige Seilbremse ist aus der DE 26 39 520 C3 bekennt. Bei der bekannten Seilbremse wird durch Klemmverbindung mit dem zu bremsenden Befestigungsseil ein Haftreibungswiderstand erzeugt, durch den bei schlagartiger Belastung, beispielsweise durch Steinschlag, die Schlagenergie in Reibungsenergie umgewandelt wird. Die Klemmverbindung ist derart ausgebildet, daß das Befestigungsseil an zwei benachbarten Seilstellen an eine Gleitplatte angepreßt wird. Die Fixierung erfolgt dabei mit Schraubenbolzen und Muttern, mit denen Teile von Seilbriden festgezogen werden. Die auf diese Weise gewonnene Klemmkraft, welche den Haftreibungswiderstand bewirkt, hängt ab von der Kraft, mit welcher diese Seilbriden jeweils durch die Schraubverbindungen am Montageort festgezogen sind. Aus unterschiedlichen Klemmkräften resultieren unterschiedliche Haftreibungswiderstände. Ferner kann durch auf die Schraubverbindung einwirkende Witterungseinflüsse und Temperaturwechsel die Klemmkraft und damit die Haftreibung sich nach der Montage ändern. Ferner ist die durch Klemmen bewirkte Haftreibung für unterschiedliche Zugbelastungen, welche beim Auffangen von Steinschlag oder Lawinen auf das Fangnetz wirken, immer in der gleichen Größenordnung.

Aufgabe der Erfindung ist es daher, eine Seilbremse der eingangs genannten Art zu schaffen, bei der die durch Umwandlung in Reibungsenergie gewonnene Bremskraft unabhängig ist von Klemmkräften.

Diese Aufgabe wird erfindungsgemäß dadurch gelöst, daß an einem Träger mehrere Bremselemente mit kreisrundem Querschnitt befestigt sind und daß ein Teil des Befestigungsseiles 1 um die Bremselemente mit jeweils einfachem Umschlingungswinkel geschlungen ist. Der Träger kann am Untergrund, an welchem das Auffangnetz aufgespannt werden soll, befestigt sein. Der Träger kann jedoch in vorteilhafter Weise auch an einem Stützpfosten, welcher beim Aufspannen des Fangnetzes verwendet wird, befestigt sein. Das Befestigungsseil kann mit seinem einen Endteil um die Bremselemente am Träger geschlungen sein und mit seinem anderen Ende mit dem Seil oder auch mit einem schwenkbar oder sonstwie beweglich am Untergrund angeordneten Stützpfosten für das Fangnetz verbunden sein.

Durch die jeweils einfache Umschlingung des Befestigungsseils um die Bremselemente am Träger kann in vorteilhafter Weise eine selbstverstärkende Umschlingungsreibung erreicht werden, die durch die Belastungsenergie, welche auf das Befestigungsseil einwirkt, erzeugt wird. Je nachdem wie hoch die Belastungsenergie ist, welche auf das Befestigungsseil einwirkt, erreicht man einen selbstverstärkenden Effekt für die Umschlingungsreibung zwischen den Bremselementen und den mit jeweils einfachen Umschlingungswinkeln um die Bremselemente geschlungenen Befestigungseil. Das entsprechende Seilstück ist mäanderförmig um die Bremselemente geschlungen, so daß bei aufeinanderfolgenden Bremselementen entgegengesetzt liegende Umschlingungsswinkel vorliegen.

Auf diese Weise erreicht man eine völlige Unabhängigkeit der Bremskraft von den Klemm- bzw. Verbindungskräften, mit denen die einzelnen Bauteile der Seilbremse miteinander verbunden sind. Auch Witterungseinflüsse und Temperaturwechsel beeinträchtigen die Wirkungsweise bzw. die Bremskraft, welche aus der selbstverstärkenden Umschlingsreibung resultiert, nicht.

Der Träger kann in Form von zwei Trägerplatten ausgebildet sein, die parallel zueinander angeordnet sind und zwischen denen die Bremselemente bevorzugt in Form von Bolzen angeordnet sind. Die Bolzen können durch Schraubverbindung, welche durch Gewindestücke an den Bolzen und durch aufgeschraubte Muttern gebildet werden, mit den Trägerplatten verbunden sein. Der Abstand der beiden Trägerplatten voneinander ist größer als die Dicke des abzubremsenden Befestigungseiles bzw. des Seilstückes, das in der Seilbremse mäanderförmig geführt wird. Bevorzugt wird ein Endteil des Befestigungsseiles zwischen den beiden Trägerplatten um die bolzenförmigen Bremselemente geschlungen. Zur Erzielung der selbstverstärkenden Umschlingsreibung verwendet man bevorzugt drei Bremselemente. Diese sind in einer Reihe, bevorzugt in einer geradlinigen Reihe, in Längsrichtung der rechteckig ausgebildeten Trägerplatten angeordnet. Die Bremselemente können jedoch in der Reihe auch teilweise oder insgesamt versetzt zueinander angeordnet sein.

Anhand der Figuren wird an Ausführungsbeispielen die Erfindung noch näher erläutert. Es zeigt:
- Fig. 1: in perspektivischer Explosivdarstellung die einzelnen Bauteile eines Ausführungsbeispiels der Seilbremse;
- Fig. 2: eine perspektivische Ansicht auf das Ausführungsbeispiel der Fig. 1, wobei die obere Trägerplatte zur besseren Darstellung des Wirkungsprinzips der Bremse weggelassen ist;
- Fig. 3: eine Draufsicht auf das Ausführungsbeispiel der Fig. 1 und 2;
- Fig. 4: zwei Möglichkeiten der Anordnung der in den Fig. 1 bis 3 dargestellten Seilbremse; und
- Fig. 5: eine weitere Anordnungsmöglichkeit der in den Fig. 1 bis 3 dargestellten Seilbremse.

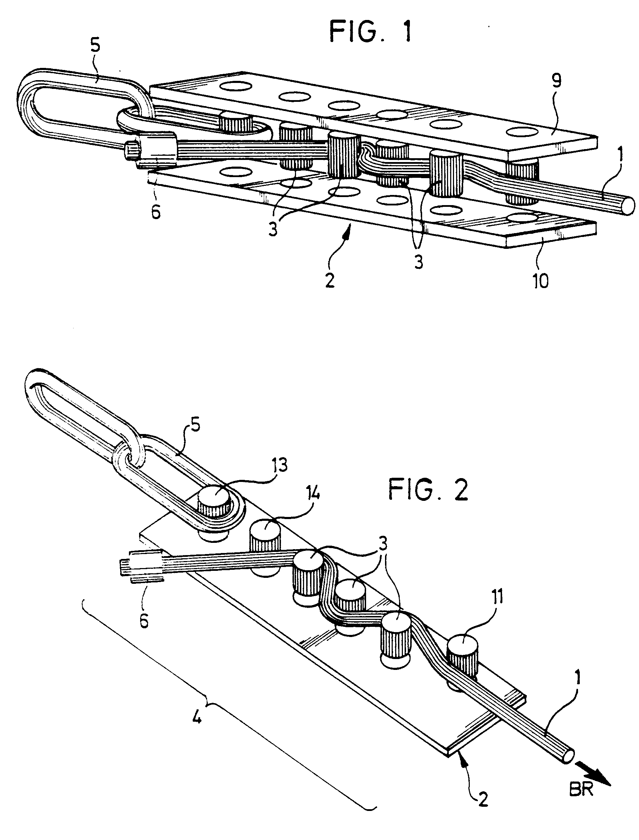

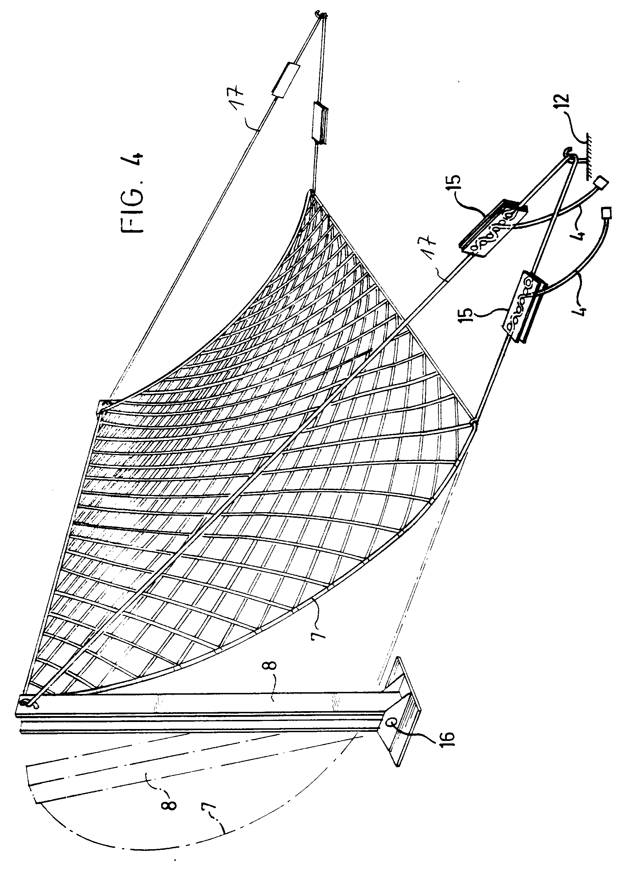

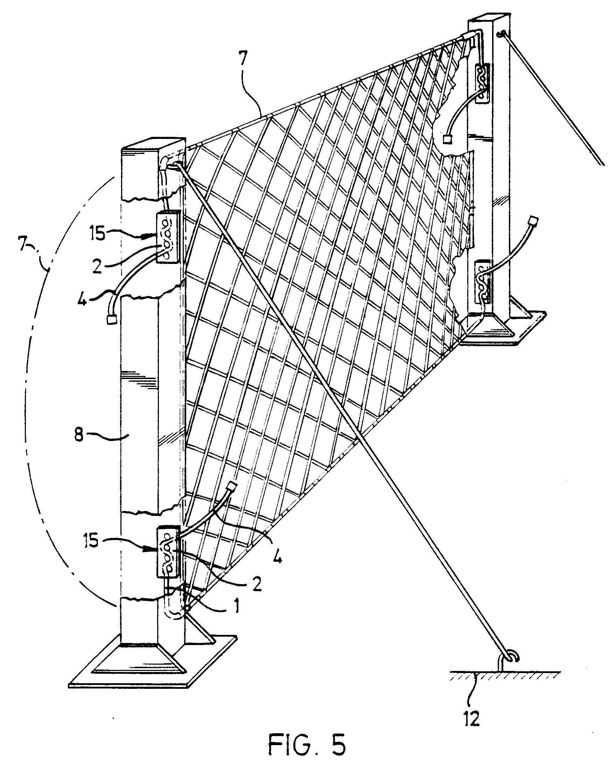

Das in den Fig. 1 bis 3 dargestellte Ausführungsbeispiel einer Seilbremse 15 (Fig. 4 und 5) besitzt einen Träger 2, der aus zwei etwa rechteckigen, parallelen Trägerplatten 9 und 10 besteht. Zwischen den Trägerplatten 9 und 10 sind Bremselemente 3 in Form von Bolzen in einer Reihe angeordnet. Beim dargestellten Ausführungsbeispiel sind die bolzenförmigen Bremselemente 3 mit kreisrundem Querschnitt in einer Reihe, und zwar in einer geradlinien Reihe, angeordnet. Diese Reihe erstreckt sich in einer Reichtung (Pfeil BR), in welcher eine Belastungsenergie auf ein abzubremsendes Befestigungsseil 1 wirkt. Die Bremselemente 3 können in dieser Reihe jedoch auch versetzt zueinander angeordnet sein. Der Träger kann auch als Gehäuse oder als Rahmen ausgebildet sein.

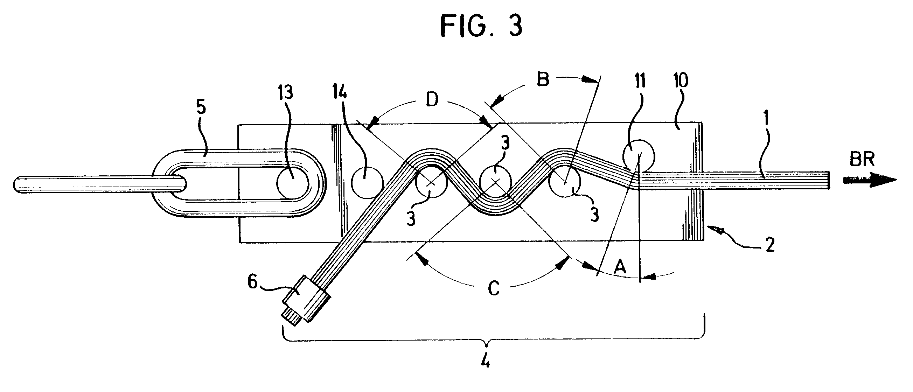

Das Befestigungsseil 1 ist mit einem Endteil 4 in einfachen Umschlingungswinkeln D, C und B um die bolzenförmigen Bremselemente 3 geschlungen. Ferner ist das Befestigungsseil 1 um einen Führungsbolzen 11, der auch als Bremselement wirkt, mit einem Umschlingungswinkel A geschlungen (Fig. 3). Der Führungsbolzen 11 ist gegenüber den Bremselementen 3 versetzt angeordnet. Durch den in Bolzenreihe hinsichtlich der Belastungsrichtung BR letzten Bolzen 11 wird gewährleistet, daß die Belastungsrichtung BR mit der Mittellinie der Mäanderform zusammenfällt, mit welcher das Seilstück 4 um die Bremselemente 3 geschlungen ist. Durch diese versetzte Anordnung des in Belastungsrichtung BR nach den Bremselementen 3 angeordneten Führungsbolzen 11 wird der Umschlingungswinkel B am in Belastungsrichtung BR letzten Bremselement 3 kleiner als die Umschlingungswinkel D und C an den vorhergehenden Bremselementen 3. Vor dem ersten Bremselement 3 ist ein weiterer Führungsbolzen 14 vorgesehen. Dieser Führungsbolzen 14 lenkt das Ende des Befestigungsseiles 1 seitlich aus der Fluchtungslinie der Belastungsrichtung BR aus. Das Ende des ausgelenkten Seilstückes besitzt eine Seilverdickung 6, die als Anschlag wirken kann. Am Träger 2 ist ferner in der Fluchtungslinie der Belastungsrichtung BR ein Befestigungsbolzen 13 vorgesehen, an welchem Befestigungsmittel 5, beispielsweise in Form von Kettengliedern, angreifen. Über die Befestigungsmittel 5 kann der Träger 2 mit den dazwischen angeordneten Bremselementen, d. h. die Seilbremse am Untergrund 12 (Fig. 4), an welchem das Fangnetz aufgespannt werden soll, befestigt werden.

Beim dargestellten Ausführungsbeispiel liegen der Befestigungsbolzen 13, der Führungsbolzen 14 in der gleichen Fluchtlinie, d.h. in der Belastungsrichtung BR wie die Bremselemente 3. Auf diese Weise wird in Abhängigkeit von der Belastung (Zugbelastung) des Befestigungsseiles 1 eine selbstverstärkende Umschlingungsreibung zwischen den Bremselementen 3 und auch durch die Umschlingung des letzten Führungsbolzens 11 erreicht. Diese selbstverstärkende Umschlingungsreibung der Bremse wirkt zwischen der Verankerungsstelle, an welcher die Bremse 15 mittels der Befestigungsmittel 5 befestigt ist, und dem Befestigungsseil 1, welches mit dem Fangnetz 7 und/oder einem Stützpfosten 8, mit welchem das Fangnetz am Untergrund aufgespannt ist, verbunden sein (Fig. 4).

Die Seilbremse bzw. der Träger 2 der Seilbremse kann jedoch, wie in Fig. 5 dargestellt ist, auch am Stützpfosten 8 befestigt sein. Es ist auch möglich, daß ein Teil des Stützpfostens 8 Bestandteil des Trägers 2, beispielsweise einer der beiden Trägerplatten 9 bzw. 10, ist. Das Endstück 4 des Befestigungsseiles 1 ist dann ebenfalls, wie in der Fig. 5 dargestellt ist, mit jeweils einfachen Umschlingungswinkeln um die Bremselemente 3 geschlungen.

Beim Ausführungsbeispiel der Fig. 4 ist der Stützpfosten 8 um eine Achse 16 schwenkbar angeordnet, so daß eine durch die Seilbremse 15 gebremste Schwenkbewegung des Pfostens 8 in die strichlierte Darstellung erreicht wird. Ferner kann beim Ausführungsbeispiel der Fig. 4 das Fangnetz 7 eine gebremste Bewegung in die strichlierte Position ausführen, wenn eine Belastung auf das Fangnetz und das Befestigungsseil durch Steinschlag oder dgl. einwirkt. Es ist auch möglich, die Seilbremsen 15 an den oberen Enden der Stützpfosten 8 zu befestigen und die Spannseile 17 mit ihren Endteilen durch die Seilbremsen zu führen.

Die Umschlingungswinkel A, B, C und D sind in vorteilhafter Weise so bemessen, daß bei D der größte Umschlingungswinkel vorhanden ist und sich die Umschlingungswinkel C, B und A in dieser Reihenfolge verringern, d.h., in Belastungsrichtung BR gesehen, am Anfang der Reihe der Bremselemente ist der Umschlingungswinkel (im Ausführungsbeispiel der Umschlingungswinkel D) am größten. Die Umschlingungswinkel an den in Belastungsrichtung BR nachfolgenden Bremselementen (beim Ausführungsbeispiel die Umschlingungswinkel B und A) nehmen in dieser Reihenfolge allmählich ab, wie das auch aus Fig. 3 zu ersehen ist. Die Umschlingungswinkel C und D können auch gleich groß sein.

Durch entsprechende Positionierung, d. h. durch entsprechende Bemessung des Abstandes der Bremselemente, der Durchmesser der Bremselemente und der Führungsbolzen 11 und 14, wobei der Führungsbolzen 11 ebenfalls eine gewisse Bremswirkung noch ausübt, läßt sich eine Einstellung der Bremsstrecke und auch des Selbstverstärkungsgrades der Umschlingungsreibung erreichen. Wie insbesondere aus den Fig. 1 und 2 hervorgeht, ist die Dicke des Befestigungsseiles 1 so bemessen, daß das Seil von den Trägerplatten 9 und 10, welche die Bremselemente und die Führungsbolzen halten, nicht berührt wird.

## Patentansprüche

1. Seilbremse für ein Befestigungsseil zum Fixieren eines Fangnetzes, insbesondere Steinschlagnetzes, bei der eine auf das Befestigungsseil einwirkende schlagartige Belastungsenergie in Reibungsenergie umgewandelt wird, dadurch gekennzeichnet, daß an einem Träger (2) mehrere Bremselemente (3, 11) mit kreisrundem Querschnitt befestigt sind, und daß ein Teil des Befestigungsseiles (1) um die Bremselemente mit jeweils einfachem Umschlingungswinkel geschlungen ist.

2. Seilbremse nach Anspruch 1, dadurch gekennzeichnet, daß durch Umschlingungsreibung zwischen den Bremselementen (3) und dem um die Bremselemente (3) geschlungenen Befestigungsseil (1) die Bremskraft gebildet ist.

3. Seilbremse nach Anspruch 1 oder 2, dadurch gekennzeichnet, daß ein Endteil (4) des Befestigungsseiles (1) um die Bremselemente (3) geschlungen ist.

4. Seilbremse nach einem der Ansprüche 1 bis 3, dadurch gekennzeichnet, daß der Träger (2) am Untergrund, an welchem das Fangnetz (7) aufgespannt wird, befestigt ist.

5. Seilbremse nach einem der Ansprüche 1 bis 3, dadurch gekennzeichnet, daß der Träger (2) an einem Stützpfosten (8) für das Fangnetz (7) befestigt ist.

6. Seilbremse nach einem der Ansprüche 1 bis 5, dadurch gekennzeichnet, daß die Bremselemente (3) auf dem Träger (2) in einer Reihe angeordnet sind.

7. Seilbremse nach einem der Ansprüche 1 bis 6, dadurch gekennzeichnet, daß der Träger (2) von zwei parallelen Trägerplatten (9, 10) gebildet ist, zwischen denen die Bremselemente (3) angeordnet sind.

8. Seilbremse nach einem der Ansprüche 1 bis 7, dadurch gekennzeichnet, daß wenigstens drei Bremselemente (3) vom Befestigungsseil (1) umschlungen sind.

9. Seilbremse nach einem der Ansprüche 1 bis 8, dadurch gekennzeichnet, daß das in Richtung der Seilbelastung (SB) letzte Bremselement (11) gegenüber den anderen Bremselementen (3) derart versetzt ist, daß die Umschlingungswinkel am vorletzten Bremselement und am letzten Bremselement gegenüber den Umschlingungswinkeln der anderen Bremselemente verkleinert sind.

10. Seilbremse nach einem der Ansprüche 1 bis 9, dadurch gekennzeichnet, daß die Bremselemente (3, 11) als Bolzen ausgebildet sind.

11. Seilbremse nach einem der Ansprüche 1 bis 10, dadurch gekennzeichnet, daß die Bremselemente (3, 11) durch Schraubverbindung mit dem Träger (2) verbunden sind.

12. Seilbremse nach einem der Ansprüche 1 bis 11, dadurch gekennzeichnet, daß in der Reihe der Bremselemente (3, 11) die Umschlingungswinkel (D-A) in Belastungsrichtung (BR) kleiner werden.

13. Seilbremse nach einem der Ansprüche 1 bis 12, dadurch gekennzeichnet, daß in der Reihenfolge der aufeinanderfolgenden Bremselemente (3, 11) an jeweils benachbarten Bremselementen an entgegengesetzt liegenden Umschlingungen die Umschlingsreibungen bei belastetem Befestigungsseil (1) entstehen.

14. Seilbremse nach einem der Ansprüche 1 bis 13, dadurch gekennzeichnet, daß die Umschlingungsreibungen an den in Belastungsrichtung aufeinanderfolgenden Bremselementen (3, 11) sich ändern. Belastungsrichtung aufeinanderfolgenden Bremselementen (3, 11) sich verringern.
